# EUROPEAN PATENT SPECIFICATION

(11) **EP 0 875 969 B1**
(45) Date of publication and mention of the grant of the patent: **14.11.2001**
(21) Application number: 98302476.1
(22) Date of filing: 31.03.1998
(51) Int. Cl.: H01S 3/131, H01S 3/06

(54) **Optical fiber amplifier and its driving method**
Faseroptischer Verstärker und Verfahren zu seiner Ansteuerung
Amplificateur à fibre optique et méthode de commande

(30) Priority: 31.03.1997 JP 8134097
(43) Date of publication of application: 04.11.1998
(73) Proprietor: NEC CORPORATION, Tokyo (JP)
(72) Inventor: Ogata, Takaaki, Minato-ku, Tokyo (JP)
(74) Representative: Moir, Michael Christopher

(56) References cited:
- GB-A- 2 304 452
- PATENT ABSTRACTS OF JAPAN vol. 017, no. 401 (E-1404), 27 July 1993 & JP 05 075198 A (TOSHIBA CORP), 26 March 1993,

## Description

### BACKGROUND OF THE INVENTION

### Field of the Invention

The present invention relates to an optical fiber amplifier, which is used for an optical fiber transmission system, for amplifying optical signals before transmission and its driving method.

### Related Background Art

An optical transmission system having optical fiber as a transmission medium has been applied to various fields such as a long distance trunk communication, a submarine communication, and a subscriber communication. In recent years, there has been developed a rare-earth-element-doped optical fiber amplifier which uses optical fiber having a core in which rare earth elements such as erbium are doped, as an optical amplifying medium, and it has been applied to an optical transmission system. Generally, a laser light having a band of 1.48 µm or of 0.98 µm is input to the optical fiber amplifier as an excitation light. In order to control an optical output power of the optical fiber amplifier, is applied a method of controlling power of a semiconductor laser which is an excitation light source.

In a conventional optical fiber amplifier, an optical signal having a band of 1.55 µm is entered into an erbium-doped optical fiber 1. The excitation light having the band of 1.48 *µ* m transmitted from the semiconductor laser which is the excitation light source is entered from an optical coupler to the erbium-doped optical fiber described in the above, so that the optical signal having the band of 1.55 µm is amplified. The amplified optical signal is branched to be entered into an optical detector via an optical branching device. An optical current signal output from this optical detector is converted to a voltage signal in a current-to-voltage conversion circuit. Furthermore, the voltage signal is compared with a reference voltage in a differential amplifier and then an error voltage signal is output from the differential amplifier. The error voltage signal is entered to a driver of the excitation light source via an amplifier and a time-constant circuit. The driver is controlled so that the error voltage signal becomes zero, in other words, so that an optical output power of the optical fiber amplifier is equal to a value of the reference voltage through a bias current feedback control of the semiconductor laser.

In the above optical fiber amplifier, it is preferable to increase a controlled gain and a controlled time constant in order to increase a stability of the optical output power. Therefore, a controlled gain of the conventional optical fiber amplifier is approx. 20 dB and its controlled time constant is of the order of hundreds of ms. In the above conventional optical fiber amplifier, however, it taxes hundreds of ms as described above to start an optical output after the power is turned on. Accordingly, a communication line is put in the OFF state during this time. To reduce the time to start the optical output, it is necessary to decrease the controlled gain and the controlled time constant. A low controlled gain and a low controlled time constant, however, deteriorate a communication quality due to a decrease of a stability of the optical output power.

### SUMMARY OF THE INVENTION

It is an object of at least the preferred embodiments of the present invention to provide an optical fiber amplifier having a highly stable output power and a short start-up time and its driving method.

One aspect of the present invention is an optical fiber amplifier comprising a rare-earth-element-doped optical fiber and an excitation light source for transmitting an excitation light to the optical fiber, further comprising a driver of the excitation light source, an optical detector for detecting an output light from the optical fiber amplifier, a gain variable amplifier and a variable time-constant circuit for controlling the driver, and a comparison and decision circuit for controlling the gain variable amplifier and the variable time-constant circuit based on an output from the optical detector. If the output value of the optical detector is smaller than a predetermined value, the comparison and decision circuit controls the gain of the gain variable amplifier and the time constant of the variable time-constant circuit to be equal to predetermined smaller values. If the output value of the optical detector reaches the predetermined value, the comparison and decision circuit controls the gain from the gain variable amplifier and time constant of the variable time-constant circuit to be equal to predetermined greater values.

There may be a differential amplifier for comparing an output value of the optical detector with a reference value and for transmitting an output differential signal between them to the gain variable amplifier and the variable time-constant circuit, in addition to the above configuration.

In another aspect of the invention according to claim 4, a driving method of the optical fiber amplifier comprises detecting a level of an output light of the optical fiber amplifier and adjusting the controlled gain of the optical fiber amplifier and the controlled time constant thereof according to the level. The adjustment is between two values of gain and two values of time constant, and adjustment includes setting the predetermined smaller controlled gain and shorter controlled time constant if the output light of the optical fiber amplifier is smaller than a predetermined level and switching to the predetermined greater controlled gain and longer controlled time constant if the output light reaches the predetermined level.

As described above, the optical fiber amplifier of the present invention and its driving method provides a short start-up time of an output power and high stability simultaneously.

### BRIEF DESCRIPTION OF THE DRAWINGS

The above and other objects, features and advantages of the present invention will become apparent from the following detailed description when taken with the accompanying drawings by way of example only and in which:
Fig. 1 is a block diagram illustrating a sample configuration of a conventional optical fiber amplifier;
Fig. 2 is a block diagram illustrating a sample configuration of an optical fiber amplifier of the present invention;
Figs. 3A, 3B, 3C, and 3D are graphs illustrating time transitions of an input of a comparison and decision circuit, an output of the comparison and decision circuit, a controlled gain of a gain variable amplifier, and a controlled time constant of a variable time-constant circuit, respectively;
Fig. 4 is a graph illustrating a time transition of an optical output power after the optical fiber amplifier of the present invention is powered; and
Fig. 5 is a graph illustrating a time transition of an optical output power after a conventional optical fiber amplifier is powered.

### DETAILED DESCRIPTION OF THE PREFERRED EMBODIMENTS

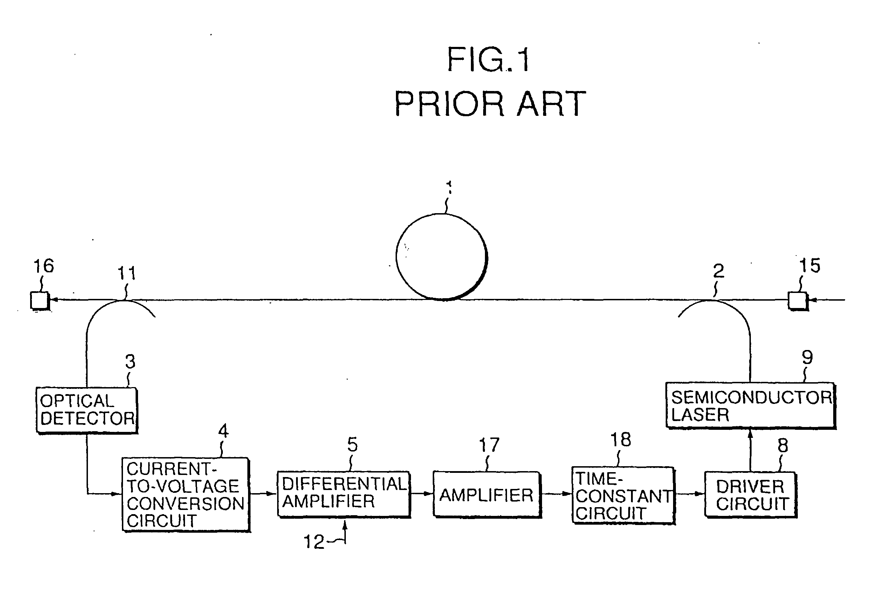

Referring first to Fig. 1, a conventional optical fiber amplifier will be briefly described below. An erbium-doped optical fiber 1 is provided between an optical coupler 2 and an optical branching device 11. An excitation light from a semiconductor laser 9 is incident on the erbium-doped optical fiber 1 from the optical coupler 2. The amplified optical signal is entered into an optical detector 3 via the optical branching device 11 and then output from a current-to-voltage conversion circuit 4 as a voltage signal. This voltage signal is compared with a reference voltage 12 in a differential amplifier 5. As a result of the comparison, the differential amplifier 5 transmits an error voltage signal to a driver circuit 8 of an excitation light source via an amplifier 17 and a time-constant circuit 18. The driver circuit 8 controls the error voltage signal so as to become zero.

A similar optical fiber amplifier is disclosed in Patent Abstracts of Japan, vol. 017, no. 401 (E-1404), 27 July 1993 & JP-A-05 075198.

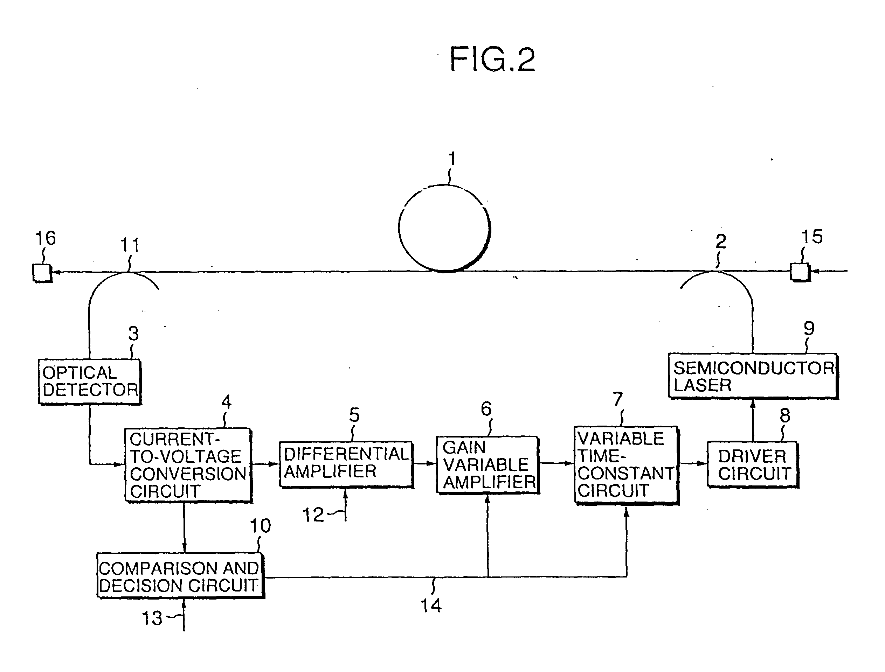

Referring to Fig. 2, there is shown a sample configuration of an optical fiber amplifier of the present invention. An optical signal having a band of 1.55 µm is entered from an input port 15 to an erbium-doped optical fiber 1. An excitation light having a band of 1.48 µm transmitted from a semiconductor laser 9 is entered from an optical coupler 2 to the erbium-doped optical fiber 1, so that the optical signal having the band of 1.55 µm is amplified. An excitation light having a band of 0.98 µm can also be applied to it. The amplified optical signal is output from an output port 16. The optical signal is further entered to an optical detector 3 via an optical branching device 11. An photocurrent signal output from the optical detector 3 is converted to a voltage signal in a current-to-voltage conversion circuit 4. The voltage signal is entered to a differential amplifier 5 and a comparison and decision circuit 10. The differential amplifier 5 compares the voltage signal with a reference voltage 12 and then outputs an error voltage signal. The error voltage signal is amplified by a gain variable amplifier 6 and entered to a driver circuit 8 of an excitation light source via a variable time-constant circuit 7. The driver circuit 8 supplies a bias current to the semiconductor laser 9 and controls an excitation light output from the semiconductor laser 9 so that the error voltage signal becomes zero, in other words, so that an optical output power of the optical fiber amplifier is equal to a value corresponding to the reference voltage 12. The comparison and decision circuit 10 compares a voltage signal output from the current-to-voltage conversion circuit 4 with a reference voltage 13 for decision and then transmits a control signal to the gain variable amplifier 6 and the variable time-constant circuit 7 based on the result.

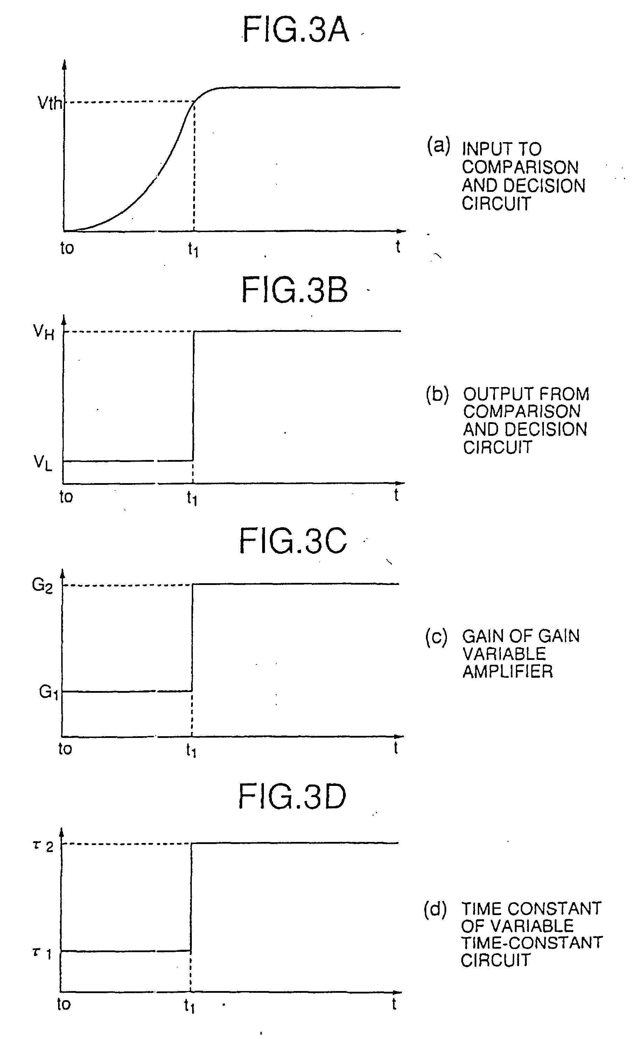

Next, a driving method of the optical fiber amplifier will be described below. Referring to Fig. 3A, there is shown a transition of a voltage signal entered to the comparison and decision circuit 10 after the optical fiber amplifier is powered at time t0. A value of an input voltage to the comparison and decision circuit 10 starts to increase gradually from time t0, going through Vth at time t1, and then reaches a certain value. As the threshold Vth, a value, for example, approx. 2 to 3 dB lower than the certain value can be selected. Referring to Fig. 3B, there is shown a transition of an output voltage from the comparison and decision circuit 10 after the optical fiber amplifier is powered at the time t0. The output from the comparison and decision circuit 10 remains a low voltage value VL from the time t0 to the time t1. When the input voltage value to the comparison and decision circuit 10 becomes Vth at the time t1, an output value of the comparison and decision circuit 10 increases from VL to a higher voltage value VH. Figs. 3C and 3D illustrate a transition of a gain of the gain variable amplifier 6 and that of a time constant of the variable time constant circuit 7 afte: the optical fiber amplifier is powered at the time t0, respectively. As described above, an output voltage of the comparison and decision circuit 10 is entered to the gain variable amplifier 6 and the variable time constant circuit 7. The gain variable amplifier 6 and the variable time-constant circuit 7 receive a low voltage value VL entered from the comparison and decision circuit 10 from the time t0 to the time t1, which results in the gain and the time constant set to low values G1 and τ 1, respectively.

When an input voltage value to the comparison and decision circuit 10 reaches the predetermined threshold Vth at the time t1, the comparison and decision circuit 10 outputs a high voltage VH, which is then entered into the gain variable amplifier 6 and the variable time-constant circuit 7. The gain variable amplifier 6 and the variable time-constant circuit 7 receive the above voltage VH and increase the gain to G2 (where G2>G1) and the time constant to τ 2 (where τ 2>τ 1). Therefore, the optical fiber amplifier is started in a short time at the low time constant τ 1 from the time t0 when the optical fiber amplifier is powered to the time when an optical output power reaches the predetermined threshold Vth, and after the optical fiber amplifier is started, the gain and the time constant are switched to the high gain G2 and the high time constant τ 2, by which a stable optical output power is obtained.

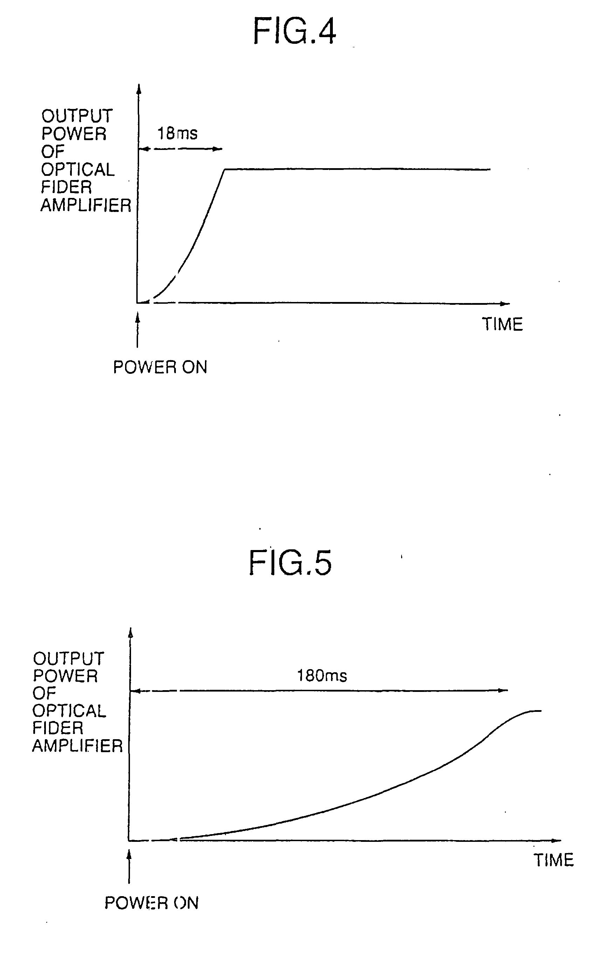

The optical fiber amplifier is composed of a Fabri-Perot type laser having a band of 1.48 µm used as a semiconductor Laser 9 for the excitation light source and fiber having a noise figure 6 dB and the maximum optical gain 40 dB used as the erbium-doped optical fiber 1. The optical signal has a band of 1.55 µm. As for the gains of the gain variaole amplifier 6, G1 and G2 are set to 10 dB and 40 dB, respectively, and as for the time constants of the variable time-constant circuit 7, τ 1 and τ 2 are set to 20 msec and 200 msec, respectively. Referring to Fig. 4, there is shown a relationship between time and an output power of the optical fiber amplifier under these conditions. It takes 18 mS to rise the optical output power after the power is turned on. Next, Fig. 5 illustrates a result of measuring a rise of the optical output power when using a conventional optical fiber amplifier with a gain of an amplifier 14 set to 40 dB and a time constant of a time-constant circuit to 200 msec. It takes 180 msec to rise the optical output power after the power is turned on. Therefore, the optical fiber amplifier of the present invention requires approx. one-tenth of the time of the conventional one to rise the optical output power. The gain variable amplifier 6 and the variable time-constant circuit 7 can also be arranged in parallel with the differential amplifier 5 and the driver circuit 8.

As set forth hereinabove, the optical fiber amplifier of the present invention has the gain variable amplifier for switching a controlled gain based on an output from the comparison and decision circuit and the variable time-constant circuit for switching a controlled time constant based on it. Therefore, while the output power rises, the optical fiber amplifier of the present invention is started up in a short time due to a low time constant, and after the rise of the output power, it achieves a stable optical output power due to a high gain and a high time constant.

While the present invention has been described in connection with certain preferred embodiments, it is to be understood that the subject matter encompassed by the present invention is not limited to those specific embodiments. On the contrary, it is intended to include all alternatives, modifications, and equivalents as can be included within the scope of the following claims.

Each feature disclosed in this specification, except the combination of features defined in claims 1 and 4, and/or shown in the drawings may be incorporated in the invention independently of other disclosed and/or illustrated features. The claims shall be interpreted as if the reference numerals were omitted.

The text of the abstract filed herewith is repeated here as part of the specification:

An optical fiber amplifier which is started up in a short time due to a low time constant while an output power rises and which outputs highly stable power due to a high controlled time constant and a high controlled gain after the rise of the output power. The optical fiber amplifier comprises an optical detector for monitoring a level of an output light which has branched and a comparison and decision circuit for controlling a gain variable amplifier and a variable time-constant circuit based on an output from the optical detector, so that a gain and a time constant of an exciting light source are controlled based on an output from the optical fiber amplifier.

## Claims

1. An optical fiber amplifier comprising:
a rare-earth-element-doped optical fiber (1) and an excitation light source (9) for transmitting an excitation light to the optical fiber;
a driver circuit (8) for the excitation light source;
an optical detector (3) for detecting an output light of said optical fiber amplifier;
a gain variable amplifier (6) and a variable time-constant circuit (7) for controlling said driver; and,
a comparison and decision circuit (10) for controlling said gain variable amplifier and said variable time-constant circuit based on an output from said optical detector; wherein said comparison and decision control circuit (10) controls the gain of said gain variable amplifier (6) and the time constant of said variable time-constant circuit (7) to be predetermined smaller values if the output value of said optical detector is smaller than a predetermined value, and to be predetermined greater values if the output value of said optical detector (3) reaches the predetermined value so as to provide a stable optical output power.

2. An optical fiber amplifier according to claim 1, further comprising a differential amplifier for comparing an output value of the optical detector with a reference value and for transmitting an error signal between them to said gain variable amplifier and said variable time-constant circuit.

3. An optical fiber amplifier according to claim 1, wherein said differential amplifier (5), said gain variable amplifier (6), said variable time-constant circuit (7), and said driver (8) of the excitation light source (9) are connected in that order in a rear stage of said optical detector (3).

4. A driving method of an optical fiber amplifier which comprises a rare-earth-element-doped optical fiber (1) and an excitation light source (9) for transmitting an excitation light to the optical fiber (1), the method comprising the steps of:
detecting a level of an output light of said optical fiber amplifier; and,
switching a controlled gain of said optical fiber amplifier and a controlled time constant thereof so that a predetermined smaller controlled gain and a predetermined shorter controlled time constant are set if the output light of said optical fiber amplifier is smaller than a predetermined level, and a predetermined greater controlled gain and a predetermined longer controlled time constant are set if said output light reaches the predetermined level.

5. A driving method of an optical fiber amplifier according to claim 4, wherein the output light of said optical fiber amplifier is compared with a reference value, and said exciting light source is controlled so that a difference between them becomes zero through a feedback control.

6. A driving method of an optical fiber amplifier according to claim 4, wherein the amplifier has a feedback loop adjusted to have a relatively low gain and a relatively short time constant when the output of the amplifier is low, and to have a relatively high gain and a relatively long time constant when the output of the amplifier is high.

7. A driving method of an optical fiber amplifier according to claim 6, wherein the amplifier is powered-up with the feedback loop set for relatively low gain and relatively short time constant until the output of the amplifier approaches its rated level, and the feedback loop is then adjusted to have a relatively high gain and a relatively long time constant.

8. A driving circuit according to claim 6 or 7, wherein the amplifier is part of a fiber-optic transmission system that employs a rare-earth-element-doped optical fiber.

## Patentansprüche

1. Faseroptischer Verstärker, der aufweist:
eine mit seltenen Erden dotierte optische Faser (1) und eine Anregungslichtquelle (9) zum Senden von Anregungslicht zur optischen Faser;
eine Treiberschaltung (8) für die Anregungslichtquelle;
eine optischen Detektor (3) zum Detektieren von Ausgangslicht des faseroptischen Verstärkers;
eine Verstärker (6) mit veränderbarer Verstärkung und eine Schaltung (7) mit veränderbarer Zeitkonstante zum Steuern des Treibers; und
eine Vergleichs- und Entscheidungsschaltung (10) zum Steuern des Verstärkers mit veränderbarer Verstärkung und der Schaltung mit veränderbarer Zeitkonstante aufgrund eines Ausgangssignals vom optischen Detektor; wobei die Vergleichs- und Entscheidungsschaltung (10) die Verstärkung des Verstärkers (6) mit veränderbarer Verstärkung und die Zeitkonstante der Schaltung (7) mit veränderbarer Zeitkonstante steuert, damit diese vorbestimmte kleinere Werte annehmen, wenn der Ausgangswert des optischen Detektors kleiner ist als ein vorbestimmter Wert, und um vorbestimmte größere Werte anzunehmen, wenn der Ausgangswert des optischen Detektors (3) den vorbestimmten Wert erreicht, um so stabile optische Ausgangsleistung zu liefern.

2. Faseroptischer Verstärker nach Anspruch 1, der weiter einen differentiellen Verstärker zum Vergleichen eines Ausgangswertes des optischen Detektors mit einem Bezugswert und zum Senden eines Fehlersignales zwischen diesen zu dem Verstärker mit veränderbarer Verstärkung und der Schaltung mit veränderbarer Zeitkonstante aufweist.

3. Faseroptischer Verstärker nach Anspruch 1, bei dem der differentielle Verstärker (5), der Verstärker (6) mit veränderbarer Verstärkung, die Schaltung (7) mit veränderbarer Zeitkonstante und der Treiber (8) der Anregungslichtquelle (9) in dieser Reihenfolge in einer hinteren Stufe des optischen Detektors (3) verbunden sind.

4. Ansteuerungsverfahren eines faseroptischen Verstärkers, der eine mit seltenen Erden dotierte optische Faser (1) und eine Anregungslichtquelle (9) zum Senden von Anregungslicht zur optischen Faser (1) aufweist, welches Verfahren die Schritte aufweist:
einen Pegel eines Ausgangslichtes des faseroptischen Verstärkers zu detektieren, und
eine gesteuerte Verstärkung des faseroptischen Verstärkers und eine gesteuerte Zeitkonstante desselben so zu schalten, daß eine vorbestimmte kleinere gesteuerte Verstärkung und eine vorbestimmte kürzere gesteuerte Zeitkonstante eingestellt werden, wenn das Ausgangslicht des faseroptischen Verstärkers kleiner ist als ein vorbestimmter Pegel, und eine vorbestimmte größere gesteuerte Verstärkung und eine vorbestimmte längere gesteuerte Zeitkonstante eingestellt werden, wenn das Ausgangslicht den vorbestimmten Pegel erreicht.

5. Ansteuerverfahren eines faseroptischen Verstärkers gemäß Anspruch 4, bei dem das Ausgangslicht des faseroptischen Verstärkers mit einem Bezugswert verglichen wird und die Anregungslichtquelle so gesteuert wird, daß ein Unterschied zwischen ihnen aufgrund einer Rückkopplungssteuerung null wird.

6. Ansteuerverfahren eines faseroptischen Verstärkers nach Anspruch 4, bei dem der Verstärker eine Rückkopplungsschlaufe hat, die so eingestellt ist, daß sie eine verhältnismäßig niedrige Verstärkung und eine verhältnismäßig kurze Zeitkonstante hat, wenn der Ausgang des Verstärkers niedrig ist, und eine verhältnismäßig hohe Verstärkung und eine verhältnismäßig lange Zeitkonstante hat, wenn der Ausgang des Verstärkers hoch ist.

7. Ansteuerverfahren eines faseroptischen Verstärkers nach Anspruch 6, bei dem der Verstärker in der Leistung hochgefahren wird, wobei die Rückkopplungsschlaufe auf verhältnismäßig kleine Verstärkung und verhältnismäßig kurze Zeitkonstante eingestellt ist, bis der Ausgang des Verstärkers seinen Nennpegel erreicht, und wobei dann die Rückkopplungsschlaufe so eingestellt wird, daß sie eine verhältnismäßig hohe Verstärkung und eine verhältnismäßig lange Zeitkonstante hat.

8. Treiberschaltung nach Anspruch 6 oder 7, bei dem der Verstärker Teil eines faseroptischen Übertragungssystems ist, das eine mit seltenen Erden dotierte optische Faser verwendet.

## Revendications

1. Amplificateur à fibre optique comprenant :
une fibre optique dopée avec des éléments de terres rares (1) et une source de lumière d'excitation (9) pour transmettre une lumière d'excitation à la fibre optique ;
un circuit d'attaque (8) pour la source de lumière d'excitation ;
un détecteur optique (3) pour détecter une lumière de sortie dudit amplificateur à fibre optique ;
un amplificateur à gain variable (6) et un circuit à constante de temps variable (7) pour commander ledit circuit ; et
un circuit de comparaison et de décision (10) pour commander ledit amplificateur à gain variable et ledit circuit à constante de temps variable basé sur une sortie provenant dudit détecteur optique ;
dans lequel ledit circuit de comparaison et de décision (10) commande le gain dudit amplificateur à gain variable (6) et la constante de temps dudit circuit à constante de temps variable (7) de façon à prendre des valeurs prédéterminées plus petites si la valeur de sortie dudit détecteur optique est inférieure à une valeur prédéterminée, et de façon à avoir des valeurs supérieures si la valeur de sortie dudit détecteur optique (3) atteint la valeur prédéterminée afin de produire une puissance de sortie optique stable.

2. Amplificateur à fibre optique selon la revendication 1, comprenant de plus un amplificateur différentiel pour comparer une valeur de sortie du détecteur optique avec une valeur de référence et pour transmettre un signal d'erreur entre eux au dit amplificateur à gain variable et au circuit à constante de temps variable.

3. Amplificateur à fibre optique selon la revendication 1, dans lequel ledit amplificateur différentiel (5), ledit amplificateur à gain variable (6), ledit circuit à constante de temps variable (7) et ledit circuit d'attaque (8) de la source d'excitation de lumière (9) sont reliés dans cet ordre dans un étage arrière dudit détecteur optique (3).

4. Procédé de commande d'un amplificateur à fibre optique qui comprend une fibre optique dopée avec des éléments de terres rares (1) et une source d'excitation de lumière (9) pour transmettre une lumière d'excitation à la fibre optique (1), le procédé comprenant les étapes consistant à :
détecter une valeur d'une lumière de sortie dudit amplificateur à fibre optique ; et
commuter un gain commandé dudit amplificateur à fibre optique et sa constante de temps commandée de façon qu'un gain commandé plus petit prédéterminé et une constante de temps commandée plus courte prédéterminée sont fixées si la lumière de sortie dudit amplificateur à fibre optique est inférieure à une valeur prédéterminée et un gain commandé plus grand prédéterminé et une constante de temps prédéterminée plus longue sont fixés si ladite lumière de sortie atteint la valeur prédéterminée.

5. Procédé de commande d'un amplificateur à fibre optique selon la revendication 4, dans lequel la lumière de sortie dudit amplificateur à fibre optique est comparée avec une valeur de référence et ladite source de lumière d'excitation est commandée de façon à ce qu'une différence entre elles devienne nulle au moyen d'une boucle d'asservissement.

6. Procédé de commande d'un amplificateur à fibre optique selon la revendication 4, dans lequel l'amplificateur possède une boucle d'asservissement ajustée de manière à avoir un gain relativement faible et une constante de temps relativement courte lorsque la sortie de l'amplificateur est faible et pour avoir un gain relativement élevé et une constante de temps relativement longue lorsque la sortie de l'amplificateur est élevée.

7. Procédé de commande d'un amplificateur à fibre optique selon la revendication 6, dans lequel l'amplificateur est excité avec la boucle d'asservissement réglée pour un gain relativement faible et une constante de temps relativement courte jusqu'à ce que la sortie de l'amplificateur approche sa valeur assignée et la boucle d'asservissement est alors ajustée pour avoir un gain relativement élevé et une constante de temps relativement longue.

8. Circuit de commande selon les revendications 6 ou 7, dans lequel l'amplificateur fait partie d'un système de transmission par fibre optique qui emploie une fibre optique dopée avec des éléments de terres rares.
